# EUROPÄISCHE PATENTSCHRIFT

(11) **EP 1 045 783 B1**
(45) Veröffentlichungstag und Bekanntmachung des Hinweises auf die Patenterteilung: **14.06.2006**
(21) Anmeldenummer: 99926261.1
(22) Anmeldetag: 17.04.1999
(51) Int. Cl.: B60T 8/24, B60T 7/12

(54) **VORRICHTUNG UND VERFAHREN ZUM BEGRENZEN EINER RÜCKROLLGESCHWINDIGKEIT EINES KRAFTFAHRZEUGES**
DEVICE AND METHOD FOR LIMITING A BACKWARD ROLLING SPEED OF A MOTOR VEHICLE
DISPOSITIF ET PROCEDE POUR LIMITER LA VITESSE DE ROULEMENT EN ARRIERE D'UN VEHICULE AUTOMOBILE

(30) Priorität: 29.09.1998 DE 19844542
(43) Veröffentlichungstag der Anmeldung: 25.10.2000
(73) Patentinhaber: ROBERT BOSCH GMBH, 70442 Stuttgart (DE)
(72) Erfinder: POLZIN, Norbert, D-74374 Zaberfeld (DE)
(86) Internationale Anmeldenummer: PCT/DE1999/001155
(87) Internationale Veröffentlichungsnummer: WO 2000/018624

(56) Entgegenhaltungen:
- DE-A- 3 147 598
- DE-A- 3 840 564
- US-A- 4 664 218

## Beschreibung

Die vorliegende Erfindung betrifft eine Vorrichtung und ein Verfahren zum Begrenzen bzw. Steuern einer Rückrollgeschwindigkeit eines Kraftfahrzeugs.

Bei herkömmlichen Kraftfahrzeugen, welche in der Regel einen großen Radstand, einen niedrigen Schwerpunkt und günstige Beladungszustände aufweisen, besteht keine Gefahr eines Rückwärtsüberschlages im Falle einer abrupten Bremsung während einer Rückwärtsbewegung. In jüngster Zeit sind jedoch Kraftfahrzeuge auf den Markt gekommen, welche einen wesentlich höheren Schwerpunkt und einen geringen Radstand aufweisen. Bei derartigen Kraftfahrzeugen kann es, im Falle einer plötzlichen Bremsung während einer Rückwärtsbewegung (beispielsweise bei einem Anfahren am Berg) zu Rückwärtsüberschlägen kommen.

Aus der DE 37 36 807 A1 ist eine Steuervorrichtung für die Bremsanlage eines Kraftfahrzeugs, insbesondere eines Nutzkraftfahrzeugs mit wenigstens einem durch ein Bremspedal betätigbaren, auf die Fahrzeugbremsen an den Rädern einwirkenden Hauptbremszylinder und mit einem das Kraftfahrzeug antreibenden Antriebsmotor bekannt, bei der ein Neigungssensor mit der Steuervorrichtung verbunden ist, in der eine wenigstens einem festlegbarem Wert oder Bereich des gemessenen Neigungswinkels eine Maximalgeschwindigkeit zuordnende elektronische Einrichtung vorgesehen ist, durch die bei Überschreitung dieser Maximalgeschwindigkeit ein die Fahrzeugbremsen und/oder eine Motorbremse betätigendes Steuersignal auslösbar ist. Diese Vorrichtung dient zur Vermeidung überhöhter Geschwindigkeiten von Nutzkraftfahrzeugen an Gefällestrecken, wodurch die Gefahr einer Bremsenüberlastung vermieden werden kann.

Aus der gattungsbildenden DE 196 37 297 A1 ist ein Straßenfahrzeug bekannt, bei dem die Fahrgeschwindigkeit während einer Gefällefahrt durch einen aktiven, elektronisch gesteuerten Bremseneingriff auf eine vorgegebene Sollgeschwindigkeit regelbar ist, und das mit einem Antiblockiersystem und/oder einer Anfahr-Schlupfregelung ausgerüstet ist, wobei während des Betriebes mit aktivem Bremseingriff nur die Räder der tieferen Fahrzeugachse gebremst werden, solange nur eine kleine Regelabweichung zwischen Fahrgeschwindigkeit und Sollgeschwindigkeit oder nur ein kleiner Schlupf der gebremsten Räder auftritt.

Aus der EP 0 856 446 A2 ist schließlich ein Bremssteuerungssystem bekannt, bei welchem im Falle eines Überschreitens einer Grenzgeschwindigkeit bei einer Bergabfahrt eine Bremse zur Abbremsung des Fahrzeuges auf oder unter die Grenzgeschwindigkeit beaufschlagt wird.

Der obige Stand der Technik hat als Ziel die Vermeidung einer Überlastung des Bremssystems bzw. die Gewährleistung einer möglichst gleichmäßigen Gefällefahrt. Die Problematik eines Kippens, insbesondere eines Rückwärtskippens, welche bei Fahrzeugen mit hoch gelegenem Schwerpunkt auftritt, ist nicht Gegenstand dieser Druckschriften.

Aufgabe der Erfindung ist die Schaffung eines Bremssystems, mit dem ein Rückwärtsüberschlag eines Kraftfahrzeugs in wirksamer Weise vermieden werden kann.

Diese Aufgabe wird gelöst durch eine Vorrichtung mit den Merkmalen des Patentanspruches 1 sowie durch ein Verfahren mit den Merkmalen des Patentanspruches 7.

Erfindungsgemäß kann das Rückwärtsüberschlagrisiko, welches bei Kraftfahrzeugen mit konzeptbedingt kurzem Radstand, hohem Schwerpunkt und kurzen progressiven Feder-Dämpfer-Abstimmungen verstärkt auftritt, wirksam vermieden werden. Die erfindungsgemäße Vorrichtung kann bei bekannten Antriebsschlupfregelungs- bzw. Fahrdynamikregelungs-Systemen (ASR-Systeme, FDR-Systeme) ohne zusätzlichen Hardwareaufwand implementiert werden. Der aktive Bremsmomentenaufbau begrenzt bzw. verhindert eine Rückwärtsbewegung an Steigungen und gewährleistet, daß bei abrupter Abbremsung während einer Rückrollbewegung wegen der begrenzten, geringen Fahrzeuggeschwindigkeit keine kritischen Situationen, im Extremfall ein Rückwärtsüberschlag, auftreten können. Durch Einstellung bzw. Ermittlung der Grenzgeschwindigkeit in Abhängigkeit von einem die Kippneigung des Kraftfahrzeugs beschreibenden Größe ist eine individuelle Anpassung der erfindungsgemäßen Vorrichtung bzw. des erfindungsgemäßen Verfahrens an beliebige Fahrzeugtypen durchführbar. Die Kippneigung des Kraftfahrzeugs kann beispielsweise u.a. durch einen geometrischen Kippfaktor beschrieben werden, in den die Höhe des Schwerpunkts und der Radstand, d.h. der Abstand zwischen Vorder- und Hinterachse des Fahrzeugs, eingehen. Bei der Ermittlung eines geometrischen Kippfaktors können ferner beispielsweise die longitudinalen Abstände zwischen Schwerpunkt und den jeweiligen Fahrzeugachsen berücksichtigt werden.

Vorteilhafte Ausgestaltungen der Erfindung sind Gegenstand der Unteransprüche.

Gemäß einer vorteilhaften Ausgestaltung der erfindungsgemäßen Vorrichtung sind die Mittel zum Erfassen der Rückrollgeschwindigkeit als aktive Raddrehzahlfühler mit Richtungserkennung ausgebildet. Derartige Fühler sind in preiswerter Weise verfügbar und zuverlässig einsetzbar. Im Falle der Feststellung einer Rückwärtsbewegung des Fahrzeugs mittels einer derartigen (oder einer anderen geeigneten) Sensorik kann beispielsweise über den Bremsdruck ein Bremsmoment solange aktiv in wenigstens einer Radbremse aufgebaut werden, bis die Rückrollbewegung des Fahrzeugs vorzugsweise reduziert oder zum Stillstand gebracht worden ist. Zum Aufbau eines geeigneten Bremsdrucks bzw. Bremsmoments dient vorzugsweise eine ASR-Hydraulik. Bei hydraulischen Systemen kann der Raddruck aus Komfortgründen vorzugsweise gepulst aufgebaut werden. Bei elektrischen Systemen bietet sich an, das Bremsmoment über eine langsame Zustellung bzw. Stromerhöhung ebenfalls langsam zu erhöhen, um so keine Komfortbeeinträchtigungen in Kauf nehmen zu müssen.

Zweckmäßigerweise weist die erfindungsgemäße Vorrichtung Mittel zur Erfassung einer Steigung einer Fahrbahn, auf der sich das Kraftfahrzeug befindet, insbesondere einen Neigungssensor, und Mittel zur Modifikation der Grenzgeschwindigkeit in Abhängigkeit von der erfaßten Steigung auf. Unter Berücksichtigung einer Fahrbahnsteigung in Fahrzeuglängsrichtung ist eine genauere bzw. einer jeweiligen Situation angemessenere Ermittlung einer die Kippneigung des Kraftfahrzeugs beschreibenden Größe möglich. Durch Berücksichtigung der Fahrzeuggeometrie (z.B. Abstand Hinterachse zu Fahrzeugschwerpunkt, Radstand, Höhe des Fahrzeugschwerpunktes) und der Fahrbahnneigung in Fahrzeuglängsrichtung ist ein modifizierter Kippfaktor für das Kraftfahrzeug herleitbar. Es läßt sich zeigen, daß ein derartiger Kippfaktor auf ebener Fläche (Steigungswinkel = 0) allein von der Fahrzeuggeometrie abhängt. Mittels eines Neigungssensors kann beispielsweise die Situation des "Anfahrens am Berg" erkannt werden, so daß bewußte Rückrollmanöver an leichten Steigungen, z.B. Hineinrollen in Parklücken, ermöglicht werden können. Es erweist sich insbesondere als vorteilhaft, die zugelassene Grenzgeschwindigkeit für die Rückrollbewegung in Abhängigkeit von einer erfaßten Steigung zu bestimmen, so daß beispielsweise bei sehr starken Steigungen eine niedrigere Grenzgeschwindigkeit einstellbar ist.

Zweckmäßigerweise weist die erfindungsgemäße Vorrichtung Mittel zur Ermittlung einer Längsbeschleunigung des Kraftfahrzeugs und Mittel zur Modifikation der Grenzgeschwindigkeit in Abhängigkeit von der ermittelten Längsbeschleunigung auf. Unter Berücksichtigung der Fahrzeugbeschleunigung bzw. Fahrzeugverzögerung in Fahrzeuglängsrichtung ist eine weitere Anpassung der die Kippneigung des Kraftfahrzeugs beschreibenden Größe, und damit eine konkreten Situationen genauer entsprechende Grenzgeschwindigkeit bestimmbar bzw. einstellbar. Die Längsbeschleunigung kann beispielsweise durch zeitliche Ableitung der erfaßten Raddrehzahlen, oder auch mittels spezieller Beschleunigungssensoren (z.B. Hall-Beschleunigungssensor) bestimmt werden.

Gemäß einer weiteren Ausgestaltung der Erfindung weist die Vorrichtung Mittel zum Verhindern oder Beenden einer Rückrollbewegung auf. Als Beispiele derartiger Mittel seien EMF-Systeme bzw. Hill-Holder-Systeme genannt. Unter EMF-Systemen werden hierbei elektromagnetische Feststellbremsen verstanden. Derartige Feststellbremsen sind durch Knopfdruck auslösbar, wobei die Feststellung der Bremse bzw. des Bremssystems auf elektrischem Wege über entsprechende Steller durchgeführt wird.

Zweckmäßigerweise weist die erfindungsgemäße Vorrichtung Mittel zur Feststellung der Einlegung eines Rückwärtsganges und Mittel zur Modifikation der Grenzgeschwindigkeit in Abhängigkeit von der Einlegung des Rückwärtsganges auf. Wird festgestellt, daß ein Rückwärtsgang eingelegt ist, kann davon ausgegangen werden, daß eine Rückwärtsbewegung gewollt ist, so daß die Funktion der erfindungsgemäßen Vorrichtung ausgesetzt bzw. modifiziert werden kann. Als Modifikation ist beispielsweise denkbar, eine höhere Rückwärtsfahr-Grenzgeschwindigkeit einzustellen.

Die Erfindung wird nun anhand der beigefügten Zeichnung weiter erläutert. In dieser zeigt
- Fig. 1: ein Blockschaltbild einer bevorzugten Ausführungsform der erfindungsgemäßen Vorrichtung, und
- Fig. 2: ein Flußdiagramm zur Darstellung einer bevorzugten Ausführungsform des erfindungsgemäßen Verfahrens.

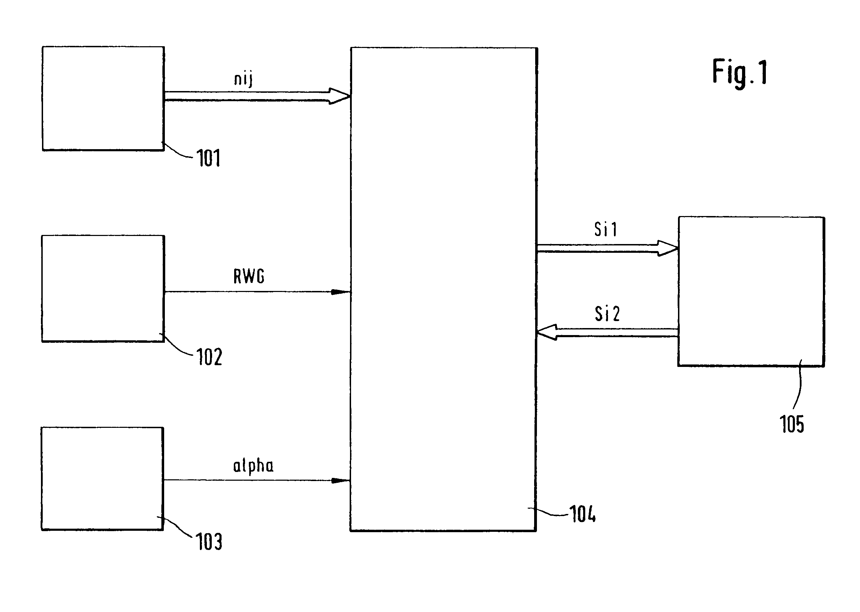

In Fig. 1 sind mit 101 Raddrehzahlsensoren bezeichnet, wobei die jeweils ermittelten Raddrehzahlen mit nᵢⱼ bezeichnet sind. Mit Index i sind am vorderen bzw. hinteren, und mit dem Index j am linken bzw. rechten Rad ermittelte Raddrehzahlen gekennzeichnet. Mit den Raddrehzahlsensoren ist ferner eine Erkennung der Drehrichtung der jeweiligen Räder bzw. Radachsen möglich.

Mit 102 sind Mittel zur Erkennung bzw. Feststellung der Einlegung des Rückwärtsgangs bezeichnet. Bei eingelegtem Rückwärtsgang wird beispielsweise einem Signal RWG der Wert 1 bzw. true, bei nichteingelegtem Rückwärtsgang der Wert false bzw. 0 zugewiesen.

Mit 103 ist ein Neigungssensor bezeichnet, der zur Erfassung der Steigung bzw. Neigung der Fahrbahn in Fahrzeuglängsrichtung verwendet wird. Der Wert alpha stellt hierbei den ermittelten Wert der Fahrbahnsteigung dar.

Die Signale nᵢⱼ, RWG und alpha werden auf ein Steuergerät 104 übertragen. Das Steuergerät 104 gibt seinerseits auf der Grundlage der empfangenen Signale Signale bzw. Größen Sᵢ1 zur Ansteuerung einer Aktuatorik 105, welche zur Beaufschlagung einer Bremse des Kraftfahrzeuges dient, aus. Die Steuereinrichtung 104 empfängt ferner Signale bzw. Größen Sᵢ2 als Rückmeldung von der Aktuatorik 105.

Die Aktuatorik 105 ist in der Lage, auf der Grundlage der erfaßten Rückrollgeschwindigkeit und der bestimmbaren bzw. einstellbaren Grenzgeschwindigkeit zur Vermeidung eines Überschlags die Bremsen des Kraftfahrzeuges zu beaufschlagen. Dies erfolgt durch Beeinflussung der den Radbremszylindern zugeordneten Ventile, so daß in diesen Bremsdruck aufgebaut wird. In dem Fall, daß eine Fahrt mit eingelegtem Rückwärtsgang vorliegt (Signal RWG = 1), kann unterstützend auch ein Motoreingriff durchgeführt werden, beispielsweise durch Beeinflussung des Drosselklappenstellers bzw. Beeinflussung des Zündzeitpunktes. Durch diese Maßnahmen wird das Motormoment reduziert.

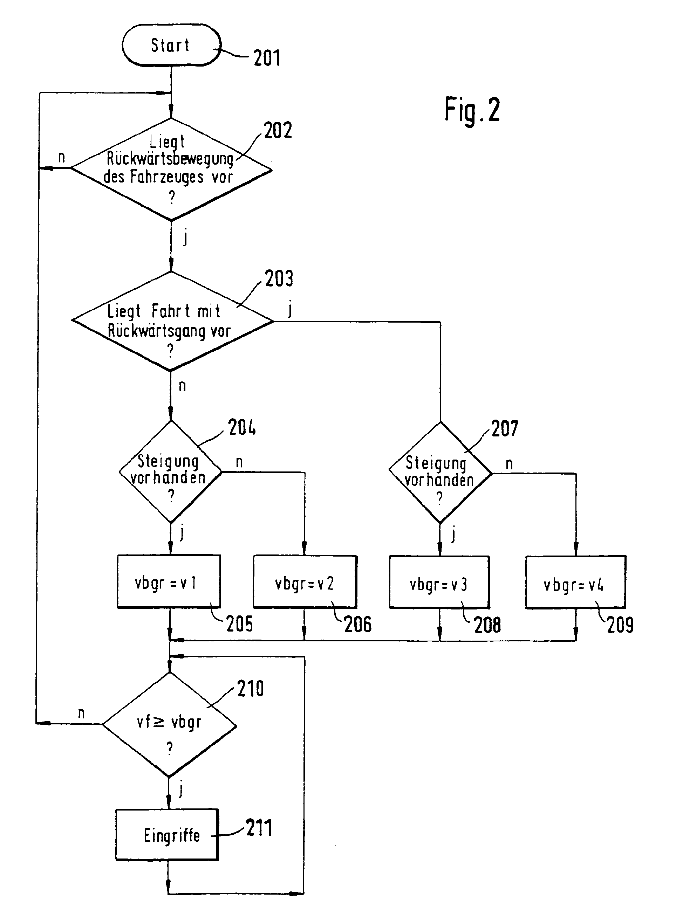

Unter Bezugnahme auf Fig. 2 wird nun das erfindungsgemäße Verfahren im einzelnen dargestellt. Mit Schritt 201 ist der Beginn des Verfahrens gekennzeichnet. In Schritt 202 erfolgt eine Überprüfung, ob eine Rückwärtsbewegung des Fahrzeugs vorliegt. Dies erfolgt durch eine Auswertung der Signale der Raddrehzahlsensoren 101, welche eine Drehrichtungserkennung zulassen. Im Falle einer Rückwärtsbewegung kann es sich um ein gewöhnliches Rückwärtsrollen (ohne Momentübertragung von dem Motor des Kraftfahrzeugs auf die Antriebsräder), oder um eine Rückwärtsfahrt handeln, bei welcher Motormoment auf die Antriebsräder übertragen wird.

In Schritt 203 wird überprüft, ob eine Fahrt mit eingelegtem Rückwärtsgang vorliegt. Zu diesem Zwecke wird das Signal RWG ausgewertet. Es ist ferner zu ermitteln, ob der Motor ein Moment an die Antriebsräder abgibt. Zu diesem Zwecke bietet sich die Auswertung eines Signals, welches die Stellung des Fahrpedals beschreibt (beispielsweise ein Potentiometer als Fahrpedalsensor) an. Ein derartiger Sensor ist in den Figuren nicht im einzelnen dargestellt. Alternativ ist auch eine Auswertung des von dem Motor abgegebenen Moments denkbar, wobei eine derartige Auswertung in dem Steuergerät 104 stattfinden könnte. Durch Feststellung, ob ein Rückwärtsgang eingelegt ist oder nicht, ist es möglich, für diese beiden Zustände wertmäßig verschiedene Grenzgeschwindigkeiten v_{bgr} zuzulassen.

Abhängig von dem Vorliegen eines Rückwärtsgangs verzweigt sich das dargestellte Flußdiagramm nach Schritt 203. In den Schritten 204 bzw. 207 wird festgestellt, ob eine Fahrbahnneigung in Fahrzeuglängsrichtung vorliegt. Zu diesem Zwecke kann das Signal alpha des Neigungssensors 103 ausgewertet werden. Wird eine Fahrbahnneigung festgestellt, werden entsprechend kleinere Grenzgeschwindigkeiten V_{bgr} eingestellt bzw. zugelassen.

Die Zuweisung der der konkreten Fahrzeugsituation entsprechenden Grenzgeschwindigkeit v_{bgr} erfolgt in Schritten 205, 206, 208 bzw. 209. Im Normalfall gilt für die dargestellten Geschwindigkeiten v1 bis v4: v1 < v2 < v3 < v4. D.h. bei vorhandener Steigung und nichteingelegtem Rückwärtsgang wird eine relativ kleine Grenzgeschwindigkeit v1, und bei eingelegtem Rückwärtsgang und nicht vorhandener Steigung eine relativ große Grenzgeschwindigkeit v4 zugelassen. Bei der Ermittlung der Grenzgeschwindigkeit wird zusätzlich zu den in den Schritten 202 bis 204 bzw. 207 ermittelten Faktoren zweckmäßigerweise die Fahrzeuglängenbeschleunigung berücksichtigt.

Entsprechend Schritt 210 wird eine Überwachung durchgeführt, ob die aktuelle Fahrzeuggeschwindigkeit v_{f} größer oder gleich der jeweiligen Grenzgeschwindigkeit v_{bgr} ist. Wird festgestellt, daß die aktuelle Fahrzeuggeschwindigkeit v_{f} ≥ v_{bgr} ist, erfolgt in der bereits beschriebenen Weise ein Bremseneingriff, und/oder bei einer Fahrt mit eingelegtem Rückwärtsgang, wie ebenfalls beschrieben, ein Motoreingriff.

Bei Kraftfahrzeugen, bei welchen ein Neigungssensor 103 nicht vorgesehen ist, ist eine Auswertung der Fahrbahnneigung nicht möglich. Hierdurch kann auf die Schritte 204 bzw. 205 bzw. die sich hieran anschließende vierfache Fallunterscheidung verzichtet werden, wodurch der Rechenaufwand bei der Durchführung des erfindungsgemäßen Verfahrens vermindert wird.

## Patentansprüche

1. Vorrichtung zum Begrenzen einer Rückrollgeschwindigkeit v_{f} eines Kraftfahrzeugs, die Mittel (101) zum Erfassen der Rückrollgeschwindigkeit und Mittel (104, 105) zum Beaufschlagen einer Bremse des Kraftfahrzeugs beim Erreichen oder Überschreiten einer voreinstellbaren Grenzgeschwindigkeit V_{bgr} aufweist **dadurch gekennzeichnet daß,** die Grenzgeschwindigkeit V_{bgr} in Abhängigkeit von einer eine Kippneigung bzw. ein Kippverhalten des Kraftfahrzeugs beschreibenden Größe einstellbar ist.

2. Vorrichtung nach Anspruch 1, **dadurch gekennzeichnet, daß** die Mittel (101) zum Erfassen der Rückrollgeschwindigkeit als aktive Raddrehzahlfühler mit Richtungserkennung ausgebildet sind.

3. Vorrichtung nach einem der Ansprüche 1 oder 2, **gekennzeichnet durch** Mittel (103) zur Erfassung einer Steigung einer Fahrbahn, insbesondere einen Neigungssensor, und Mittel (104) zur Modifikation der Grenzgeschwindigkeit V_{bgr} in Abhängigkeit von der erfaßten Steigung.

4. Vorrichtung nach einem der vorstehenden Ansprüche, **gekennzeichnet durch** Mittel (101, 104) zur Ermittlung einer Längsbeschleunigung des Kraftfahrzeugs und Mittel (104) zur Modifikation der Grenzgeschwindigkeit V_{bgr} in Abhängigkeit von der erfaßten Längsbeschleunigung.

5. Vorrichtung nach einem der vorstehenden Ansprüche, **gekennzeichnet durch** Mittel zum Verhindern oder Beenden einer Rückrollbewegung.

6. Vorrichtung nach einem der vorstehenden Ansprüche, **gekennzeichnet durch** Mittel (102) zur Feststellung der Einlegung eines Rückwärtsganges und Mittel (104) zur Modifikation der Grenzgeschwindigkeit V_{bgr} in Abhängigkeit von der Einstellung des Rückwärtsgangs.

7. Verfahren zum Begrenzen einer Rückrollgeschwindigkeit eines Kraftfahrzeugs mit folgenden Verfahrensschritten:
- Erfassen der Rückrollgeschwindigkeit v_{f} des Kraftfahrzeugs, **gekennzeichnet durch**
- Ermitteln einer Rückroll-Grenzgeschwindigkeit V_{bgr} in Abhängigkeit von einer eine Kippneigung bzw. ein Kippverhalten des Kraftfahrzeugs beschreibenden Größe,
- Vergleich der erfaßten Rückrollgeschwindigkeit v_{f} mit der ermittelten Rückroll-Grenzgeschwindigkeit v_{bgr}, und
- im Falle des Erreichens oder Überschreitens der Rückroll-Grenzgeschwindigkeit v_{bgr} Beaufschlagung einer Bremse des Kraftfahrzeugs zum Absenken der Rückrollgeschwindigkeit v_{f} auf oder unter die Rückroll-Grenzgeschwindigkeit v_{bgr}.

8. Verfahren nach Anspruch 7, **dadurch gekennzeichnet, daß** die Rückroll-Grenzgeschwindigkeit V_{bgr} unter Berücksichtigung einer aktuellen Steigung, welcher das Kraftfahrzeug ausgesetzt ist, eingestellt wird.

9. Verfahren nach einem der Ansprüche 7 oder 8, **dadurch gekennzeichnet, daß** die Rückroll-Grenzgeschwindigkeit V_{bgr} unter Berücksichtigung einer Längsbeschleunigung des Kraftfahrzeugs eingestellt wird.

10. Verfahren nach einem der Ansprüche 7 bis 9, **dadurch gekennzeichnet, daß** im Falle einer Feststellung der Einlegung eines Rückwärtsgangs des Kraftfahrzeugs die Rückroll-Grenzgeschwindigkeit V_{bgr} modifiziert wird.

## Claims

1. Device for limiting a backward rolling speed v_{f} of a motor vehicle, which device has means (101) for measuring the backward rolling speed and means (104, 105) for applying a brake of the motor vehicle when a presettable limit speed v_{bgr} is reached or exceeded, **characterized in that** the limit speed V_{bgr} can be set as a function of a parameter which describes a tilting tendency or tilting behaviour of the motor vehicle.

2. Device according to Claim 1, **characterized in that** the means (101) for measuring the backward rolling speed are embodied as active wheel speed sensors with directional recognition.

3. Device according to one of Claims 1 or 2, **characterized by** means (103) for measuring a gradient of a track, in particular an inclination sensor, and means (104) for modifying the limit speed V_{bgr} as a function of the measured gradient.

4. Device according to one of the preceding claims, **characterized by** means (101, 104) for determining a longitudinal acceleration of the motor vehicle, and means (104) for modifying the limit speed v_{bgr} as a function of the measured longitudinal acceleration.

5. Device according to one of the preceding claims, **characterized by** means for preventing or stopping a backward rolling movement.

6. Device according to one of the preceding claims, **characterized by** means (102) for detecting the engagement of a reverse gear, and means (104) for modifying the limit speed v_{bgr} as a function of the setting of the reverse gear.

7. Method for limiting a backward rolling speed of a motor vehicle having the following method steps:
- measuring the backward rolling speed v_{f} of the motor vehicle,
**characterized by**
- determining a backward rolling limit speed v_{bgr} as a function of a parameter which describes a tilting tendency or tilting behaviour of the motor vehicle,
- comparing the measured backward rolling speed v_{f} with the determined backward rolling limit speed V_{bgr}, and
- in the event of the backward rolling limit speed v_{bgr} being reached or exceeded, applying a brake of the motor vehicle to reduce the backward rolling speed v_{f} to or below the backward rolling limit speed v_{bgr}.

8. Method according to Claim 7, **characterized in that** the backward rolling limit speed V_{bgr} is set taking into consideration a current gradient to which the motor vehicle is subject.

9. Method according to one of Claims 7 or 8, **characterized in that** the backward rolling limit speed v_{b}gᵣ is set taking into consideration a longitudinal acceleration of the motor vehicle.

10. Method according to one of Claims 7 or 8, **characterized in that** the backward rolling limit speed v_{bgr} is modified if the engagement of a reverse gear of the motor vehicle is detected.

## Revendications

1. Dispositif permettant de limiter une vitesse de recul v_{f} d'un véhicule automobile, présentant des moyens (101) permettant d'enregistrer la vitesse de recul et des moyens (104, 105) permettant de solliciter un frein du véhicule automobile lorsque l'on atteint ou dépasse une vitesse limite pouvant être prédéterminée v_{bgr},
**caractérisé en ce que**
la vitesse limite v_{bgr} peut être réglée en fonction d'une grandeur décrivant une inclinaison ou un comportement d'inclinaison du véhicule automobile.

2. Dispositif selon la revendication 1,
**caractérisé en ce que**
les moyens (101) permettant d'enregistrer la vitesse de recul sont des capteurs de vitesse de rotation des roues actifs avec détection de direction.

3. Dispositif selon l'une des revendications 1 ou 2,
**caractérisé par**
des moyens (103) permettant d'enregistrer la pente d'une chaussée, en particulier un clinomètre, et des moyens (104) permettant de modifier la vitesse limite V_{bgr} en fonction de la pente enregistrée.

4. Dispositif selon l'une des revendications précédentes,
**caractérisé par**
des moyens (101, 104) permettant de déterminer une accélération longitudinale du véhicule automobile et des moyens (104) permettant de modifier la vitesse limite V_{bgr} en fonction de l'accélération longitudinale enregistrée.

5. Dispositif selon l'une des revendications précédentes,
**caractérisé par**
des moyens permettant d'empêcher un mouvement de recul ou d'y mettre fin.

6. Dispositif selon l'une des revendications précédentes,
**caractérisé par**
des moyens (102) permettant de déterminer l'enclenchement d'une vitesse de marche arrière et des moyens (104) permettant de modifier la vitesse limite V_{bgr} en fonction de l'enclenchement de la vitesse de marche arrière.

7. Procédé de limitation de la vitesse de recul d'un véhicule automobile, comprenant les étapes de procédé suivantes :
- enregistrement de la vitesse de recul v_{f} du véhicule automobile,
**caractérisé par**
- la détermination d'une vitesse limite de recul v_{bgr} en fonction d'une grandeur décrivant une inclinaison ou un comportement d'inclinaison du véhicule automobile,
- la comparaison entre la vitesse de recul enregistrée v_{f} et la vitesse limite de recul déterminée v_{bgr}, et
- dans le cas où l'on atteint ou dépasse la vitesse limite de recul v_{bgr}, sollicitation d'un frein du véhicule automobile afin de réduire la vitesse de recul v_{f} jusqu'à la vitesse limite de recul v_{bgr} ou en dessous de celle-ci.

8. Procédé selon la revendication 7,
**caractérisé en ce qu'**
on règle la vitesse limite de recul v_{bgr} en prenant en compte une pente actuelle à laquelle est exposé le véhicule automobile.

9. Procédé selon l'une des revendications 7 ou 8,
**caractérisé en ce qu'**
on règle la vitesse limite de recul v_{bgr} en prenant en compte une accélération longitudinale du véhicule automobile.

10. Procédé selon l'une des revendications 7 à 9,
**caractérisé en ce qu'**
dans le cas où l'on détermine l'enclenchement d'une vitesse de marche arrière du véhicule automobile, on modifie la vitesse limite de recul v_{bgr}.
